# EUROPÄISCHE PATENTSCHRIFT

(11) **EP 0 560 175 B1**
(45) Veröffentlichungstag und Bekanntmachung des Hinweises auf die Patenterteilung: **08.01.1997**
(21) Anmeldenummer: 93103275.9
(22) Anmeldetag: 02.03.1993
(51) Int. Cl.: B05B 15/12

(54) **Verfahren zur Rückgewinnung des Oversprays von wässrigen Überzugsmitteln beim Spritzauftrag in Spritzkabinen**
Method for recovering the overspray of a water-based coating material produced by spray coating in a spray booth
Procédé de recupération de l'excédent d'un produit de revêtement en solution aqueuse lors du revêtement par pulvérisation dans une cabine de pulvérisation

(30) Priorität: 09.03.1992 DE 4207383
(43) Veröffentlichungstag der Anmeldung: 15.09.1993
(73) Patentinhaber: Herberts Gesellschaft mit beschränkter Haftung, 42285 Wuppertal (DE)
(72) Erfinder: Saatweber, Dietrich, Dr., W-5600 Wuppertal 21 (DE); Siever, Friedrich Ludwig, W-5830 Schwelm (DE)
(74) Vertreter: Türk, Gille, Hrabal, Leifert

(56) Entgegenhaltungen:
- DE-A- 2 326 269
- DE-A- 2 353 469
- DE-C- 3 901 566

## Beschreibung

Die Erfindung betrifft ein Verfahren zur Rückgewinnung des Oversprays von wäßrigen Überzugsmitteln beim Spritzauftrag in Spritzkabinen, bei dem das Overspray in das in der Spritzkabine verwendete wäßrige Überzugsmittel rezyklisiert werden kann.

Die Substitution von Lacken, die mit organischen Lösemitteln verdünnt werden, durch wasserverdünnbare Systeme wird aus den bekannten Gründen der Umweltschonung immer wichtiger. Durch den Einsatz wasserverdünnbarer Systeme wird die Luft weniger oder gar nicht mehr durch Lösemittelemissionen verunreinigt. Ein genereller Schwachpunkt bei der Verarbeitung von Überzugsmitteln, wie wasserverdünnbaren Lacken, durch Spritzapplikation sind jedoch Probleme, die sich bei der Entsorgung des Oversprays (Lacknebel) ergeben; diese Probleme treten insbesondere bei großformatingen Serienlackierungen, wie in der Autoindustrie, auf.

Es ist bekannt, die Abluft von Spritzkabinen zur Entsorgung von Overspray durch Auswaschen mit Wasser zu reinigen. Beispielsweise wird in der DE-A1-29 45 523 ein Verfahren beschrieben, bei dem das Overspray von konventionellen lösemittelverdünnbaren Lacken mit Wasser ausgewaschen wird, worauf das Waschwasser einer Ultrafiltration unterzogen wird.

In der DE-A1-32 27 227 wird ein ähnliches System zur Entsorgung des beim Lackieren mit Wasserlacken anfallenden Oversprays beschrieben. Das Overspray wird an mit Wasser berieselten Wandungen der Spritzkabine absorbiert und das im Kreislauf geführte Berieselungswasser wird über ein Ultrafilter aufbereitet. Es hat sich jedoch gezeigt, daß das im Berieselungswasser aufgefangene Overspray nicht mehr zur weiteren Verwendung in Beschichtungsmitteln brauchbar ist, so daß es entsorgt werden muß. Es wird zwar aus der Abwasserreinigung und insbesondere bei der Entfernung von unerwünschten niedrigmolekularen Stoffen bei Elektrotauchlackierverfahren die Ultrafiltration angewendet und dadurch eine Verbesserung des Nutzungsgrades durch Recycling erzielt (DE-C2-21 58 668, DE-B2-22 29 677, EP-A1-0 127 685, EP-A1-0 137 877, US-A-3,663,405 und US-A-3,663,406), jedoch ergeben sich bei der Anwendung der Ultrafiltration für das Recycling von Overspray Probleme. Während nämlich die Ultrafiltration von Elektrotauchlacken die Rückführung des Permeats und des Retentats in das Badmaterial ermöglichte, ergeben sich für das Recycling von Overspray aus Wasserlacken durch die unterschiedliche Applikationsart (Spritzen statt Elektrotauchen) und die dadurch bedingten höheren Viskositätsunterschiede Stabilitätsprobleme, wie die Gefahr der Koagulation, Sedimentation, Phasentrennung und Bildung von Ausfällungen. In der DE-A1-34 28 300 wird zur Vermeidung der beim Verfahren der DE-A1-32 27 227 auftretenden Stabilitätsprobleme empfohlen, die Berieselung der Spritzkabine mit entsalztem Wasser durchzuführen. Es hat sich jedoch gezeigt, daß auch der Einsatz von entsalztem Wasser als Berieselungsflüssigkeit nicht dazu geeignet ist, die Stabilitätsprobleme des absorbierten Oversprays derart auszuräumen, daß eine Eignung zur Wiederverwendung im Lackmaterial erzielt wird. In der WO 91/09666 wird versucht, die gemäß dem Verfahren der DE-A1-32 276 227 auftretenden Stabilitätsprobleme dadurch zu lösen, daß die Berieselung der Spritzkabine mit Wasser erfolgt, dem ein Mittel zur Verhinderung der Koaleszenz beigegeben wird. Hierbei handelt es sich um Amine. Hierdurch werden einerseits umweltbelastende Stoffe zugesetzt und andererseits wird die Lackzusammensetzung durch Zusatz von Chemikalien verändert.

Die Aufkonzentration von in Wasser aufgenommenem Overspray durch Ultrafiltration von niedrigen auf höhere Konzentrationen führt darüber hinaus zu starken Veränderungen der wäßrigen Überzugsmittel, weil durch die Ultrafiltration bevorzugt wasserlösliche und niedermolekulare Bestandteile wie Löse- und Neutralisationsmittel entzogen werden, die zur Stabilisierung der wäßrigen Lackdispersionen und zu ihren lacktechnischen Eigenschaften wesentlich beitragen.

Dirk Saarbach und Georg Schlumpf beschreiben in Oberfläche + JOT 1991, Heft 3, S. 18 bis 20, "Die Naßlackierung ohne Emissionen oder Sondermüll" die Lackierung von Büromöbeln mit einem Wasserlackrecycling, wobei auch ein kontinuierlicher Kreislauf beschrieben wird. Es wird erwähnt, daß die Teilsysteme "wasserverdünnbarer Einbrennlack", "Ultrafiltrationstechnik" und "Spritzanlage" aufeinander abgestimmt sein müssen. Auch wird die Zugabe von Additiven zum Recyclingprozeß beschrieben. Es wird jedoch kein Hinweis gegeben, wie ein Ablauf ohne Stabilitätsprobleme erreicht wird; darüber hinaus wird die Zusammensetzung des Originallackes durch die Zugabe der Additive verändert.

Bei den oben erwähnten Verfahren entsteht darüber hinaus ein Problem, wenn häufiger Farbtonwechsel stattfindet. Es bildet sich durch den Farbtonwechsel ein Mischfarbton, der nur noch für die Lackierungen untergeordneter Flächen genutzt werden kann. Das gilt auch für DE-C2-33 32 457, dem Nachfolgepatent von DE 32 27 227, in welchem beschrieben wird, daß für Farbtonwechsel die Kabinenwände aus drehbaren Segmenten bestehen.

Es bestand daher die Aufgabe, ein Verfahren zur Rückgewinnung des Oversprays von wäßrigen Überzugsmitteln bereitzustellen, das eine Wiederverwertung des Oversprays im wäßrigen Überzugsmittel auch bei häufigem Farbtonwechsel und dennoch den Einsatz hochqualitativer und daher meist empfindlicher Überzugmittel, wie beispielsweise wäßriger Industrielacke, bevorzugt Autolacke, im Praxismaßstab ermöglicht.

Es hat sich gezeigt, daß diese Aufgabe gemäß einem Gegenstand der Erfindung gelöst werden kann durch ein Verfahren zur Rückgewinnung des Oversprays von wässrigen Überzugsmitteln beim Spritzuaftrag in Spritzkabinen, in denen wäßrige Umlaufflüssigkeit zur Aufnahme des Oversprays geführt wird, das **dadurch gekennzeichnet** ist, daß man der Umlaufflüssigkeit das Overspraymaterial in einem Elektrokoagulationsbad entzieht, wobei man die Konzentration des Oversprays im Elektrokoagulationsbad durch Ultrafiltration höher hält als in der Umlaufflüssigkeit der Spritzkabine.

Beim erfindungsgemäßen Verfahren wird so gearbeitet, daß zumindest ein Teil der wäßrigen Umlaufflüssigkeit aus der Spritzkabine (Kabinenumlaufwasser, bzw. Auswaschflüssigkeit für Overspray) kontinuierlich oder diskontinuierlich entzogen und einer Elektrokoagulation zugeführt wird. Bei der Elektrokoagulationsbehandlung wird Overspray enthalten Umlaufflüssigkeit einem Bad zugeführt aus dem das Overspray je nach seiner Natur anodisch oder kathodisch abgeschieden wird. Eine solche Abscheidung kann auch als "elektrophoretische Abscheidung" bezeichnet werden.
Dabei hat es sich im Rahmen der Erfindung gezeigt, daß es günstig ist, wenn der Festkörpergehalt der Kabinenumlaufflüssigkeit an Overspray geringer ist, als der des der Elektrokoagulationsbehandlung unterzogenen Anteils der Kabinenumlaufflüssigkeit. Erfindungsgemäß wird der unterschiedliche Festkörpergehalt durch Zwischen- bzw. Parallelschaltung einer Ultrafiltrationsbehandlung erzielt.

Es ist günstig wenn die Kabinenumlaufflüssigkeit einen möglichst geringen Festkörpergehalt, bevorzugt von höchstens 1,5 Gew.-%, aufweist, weil es bei höherem Festkörperanteil zu Problemen des Feststoffaustrages bei der erforderlichen Trennung Kabinenumluft/Umlaufflüssigkeit kommen kann. Andererseits hat es sich gezeigt, daß mit dem erfindungsgemäßen Verfahren kein zu großer Ultrafiltrationsaufwand benötigt wird, um von der Kabinenumlaufflüssigkeit von beispielsweise 1,5 Gew.-% Festkörpergehalt zu einem wiederverwertbaren Produkt von beispielsweise 20 bis 95 % Festkörpergehalt zu gelangen.

Bevorzugt wird beim erfindungsgemäßen Verfahren so gearbeitet, daß der Festkörpergehalt der Kabinenumlaufflüssigkeit bei diskontinuierlicher und kontinuierlicher Arbeitsweise bis zu 1,5 Gew.-% beträgt. Bevorzugt beträgt der Festkörpergehalt bis zu 1,0 Gew.-%.

Bevorzugt wird beim erfindungsgemäßen Verfahren so gearbeitet, daß der Festkörpergehalt an Overspray im Elektrokoagulationsbad bei 5 bis 15 Gew.-% gehalten wird.

Als Umlaufflüssigkeit in der Spritzkabine können übliche Auswaschflüssigkeiten für Overspray verwendet werden, insbesondere wird Wasser und bevorzugt entsalztes Wasser eingesetzt.

Das in dem Elektrokoagulationsbad an einer Elektrode abgeschiedene Overspray kann verschiedenen Anwendungszwecken zugeführt werden. Zweckmäßig wird es resolubilisiert und zu spritzfertigem Lack aufgearbeitet, der erneut zur Spritzkabine recyclisiert werden kann.

Das durch Elektrokoagulation erhaltene Overspraymaterial kann beispielsweise aber auch ohne Resolubilisieren von der Elektrode abgekratzt und gegebenenfalls einem weiteren Verwendungszweck (wie der Herstellung anderer, beispielsweise lösungsmittelhaltiger Lacke oder der Herstellung von Kunststoffmaterialien, wie Kunststoffplatten) zugeführt werden.

Das bei der Ultrafiltration erhaltene Permeat kann beispielsweise der Kabinenumlaufflüssigkeit zugemischt werden.

Gemäß einer bevorzugten Ausführungsform betrifft somit die Erfindung ein Verfahren zur Rückgewinnung des Oversprays von wäßrigen Überzugsmitteln beim Spritzauftrag in Spritzkabinen, bei dem das Overspray in einer wäßrigen Umlauf- bzw. Auswaschflüssigkeit aufgefangen wird. Die Umlaufflüssigkeit, die entsalztes Wasser und bis zu beispielsweise etwa 1,5 Gew.-% Festkörper enthalten kann, wird einer Ultrafiltrationsanlage zugeführt. Das Permeat wird als Umlaufflüssigkeit in die Spritzkabine zurückgeleitet. Das Retentat, das beispielsweise 5 - 15 % Festkörper enthält, wird zu einer Elektrokoagulationszelle (EKZ) geleitet, wo die Elektroabscheidung und gegebenenfalls die Resolubilisation des Oversprays stattfindet. Anschließend kann das resolubilisierte Overspraymaterial, gegebenenfalls nach Ergänzung einzelner Komponenten, direkt oder nach Mischen mit Lacknachfüllkonzentrat der Spritzkabine als Spritzmaterial oder anderen Verwendungsarten zugeführt werden.

Ein Nachteil des Elektrokoagulationsverfahrens ohne die erfindungsgemäß durchgeführte Ultrafiltration für ein Wasserlackrecycling liegt in dem Versagen bei niedrigen Feststoffgehalten. Bei geringen Feststoffgehalten von z. B. etwa 1 Gew.-% wird die für die Elektrokoagulation erforderliche Mindestabscheidestromdichte nicht mehr erreicht, oder sie ist so hoch, daß das Verfahren unwirtschaftlich wird. Zur Vermeidung von Problemen des Feststoffaustrags aus dem Kabinenumlaufwasser bei der erforderlichen Trennung Kabinenumluft/Umlaufwasser werden jedoch, wie oben beschrieben, für die Umlaufflüssigkeiten möglichst niedrige Feststoffgehalte angestrebt. Die Vorteile, niedrige Konzentration der Umlaufflüssigkeit und Anwendung der Elektrokoagulation bei geeigneten hohen Feststoffgehalten, sind möglich, wenn man die Elektrokoagulation nicht direkt mit wäßriger Kabinenumlaufflüssigkeit oder mit Kabinenwasser, das durch mehrmaligen Umlauf mit Overspray angereichert ist, sondern mit einer durch Ultrafiltration im Feststoffgehalt angereicherte Kabinenumlaufflüssigkeit durchführt. Mit diesem Verfahren kann gleichzeitig die bei der Elektrokoagulation eventuell auftretende Lösemittelanreicherung in der wäßrigen Umlaufflüssigkeit über Permeat-Verwurf gesteuert werden. Das Permeat kann auch partiell dazu verwendet werden, das elektrokoagulierte Lackkonzentrat vor der Abnahme von der Austragsvorrichtung vom anhaftenden, nicht koagulierten Tauchfilm zu reinigen und diesen direkt in das Koagulationsbad zurückzuführen.

Ein weiterer Vorteil der erfindungsgemäßen Kombination von Ultrafiltration und Elektrokoagulation liegt in der Möglichkeit, gegenüber dem reinen Ultrafiltrationsverfahren einen weitaus höheren Festkörpergehalt zu erreichen, da die Durchlaufgeschwindigkeit in den Ultrafiltrationsanlagen mit steigendem Festkörpergehalt stark abnimmt. Bei den handelsüblichen Wasserlacken ist eine Ultrafiltration von Flüssigkeiten mit über 50 Gew.-% Festkörper mit unwirtschaftlich hohem Zeitaufwand verbunden oder nicht mehr möglich.

Die Ultrafiltration kann erfindungsgemöß durch umgekehrte Osmose und/oder Hyperfiltration unterstützt werden. Diese können zusätzlich neben der Ultrafiltration durchgeführt werden.

Die Ultrafiltration, die umgekehrte Osmose und die Hyperfiltration sind dem Fachmann bekannt. Sie können mit üblichen Einheiten durchgeführt werden. Diese Filterverfahren werden sowohl in den in der Beschreibungseinleitung genannten Patentanmeldungen und Patentschriften beschrieben, als auch beispielsweise von Wilhelm R.A. Auck und Hermann A. Müller in "Grundoperationen chemischer Verfahrenstechnik", Verlag Chemie, 1982, S. 153-155, von Robert Rautenbauch und Rainer Albreit in "Grundlagen der chemischen Technik, Membrantrennverfahren, Ultrafiltration und Umkehrosmose", Otto Salle Verlag und Verlag Sauerländer, 1981, und von Thomas D. Brock in "Membrane Filtration", Springer Verlag, 1983.

Für das erfindungsgemäße Verfahren werden bei der Ultrafiltration keine hohen Drücke benötigt. Als Mindestdruck ist ein Druck erforderlich, mit dem Wasser und niedrigmolekulare Substanz in meßbarer Geschwindigkeit durch die Membranen gepreßt werden. Derartige Drücke liegen beispielsweise bei 0,7 bis 11 bar, vorzugsweise in der Größenordnung von 5 bar.

Der Druck für die umgekehrte Osmose ist definitionsgemäß größer als der osmotische Druck. Es gibt keine scharfe Abgrenzung zwischen Ultrafiltration und umgekehrter Osmose oder Hyperfiltration. Für das erfindungsgemäße Verfahren wird unter ungekehrter Osmose oder Hyperfiltration beispielsweise die Filtration verstanden, bei der niedrigmolekulare Anteile des Permeats möglichst weitgehend vom Wasser getrennt werden.

Durch den beim erfindungsgemäßen Verfahren möglichen Einsatz der umgekehrten Osmose und von Hyperfiltrationsaggregaten ergibt sich der zusätzliche Vorteil der Erfassung solcher wasserlöslicher Komponenten in das Recycling, die bei der Ultrafiltration teilweise oder völlig in das Permeat gelangen, wie wasserlösliche Kunstharze, z.B. Polyvinylalkohol, spezielle wasserlösliche Melaminharze, z.B. Cymel 327, der wasserlösliche Anteil organischer Lösemittel oder niedrigmolekulare Verbindungen, wie sie beispielsweise in dem Bericht von Dietrich Saatweber in "Untersuchung zum Einfluß der Ultrafiltration auf die Eigenschaften von Elektrotauchlacken", VII, FATIPEC KONGRESS, Kongress-Buch S. 467-474, beschrieben werden. Eventulle Änderungen in den Massenverhältnissen der nicht ins Permeat gelangenden Komponenten und der ins Permeat gelangenden Komponenten, z.B. bei unbeabsichtigtem Verlust von Ultrafiltrat, können bei Wiederverwendung zur Aufbereitung der Überzugsmittel gegebenenfalls durch geeignete Rezeptur des Nachfüllkonzentrats für die wäßrigen Überzugsmittel ausgeglichen werden. Gegebenenfalls können aber auch dem Permeat, wie vorstehend beschrieben, die Komponenten durch umgekehrte Osmose bzw. Hyperfiltration entzogen werden.

Die Elektrokoagulation ist praktisch eine Elektrobeschichtung eines abscheidbaren Materials, das an Anoden oder Kathoden eines Gleichstromkreises koaguliert (Dr. Fritz Beck "Zum Mechanismus der elektrophoretischen Lackierung", Farbe und Lack, 72. Jahrg., Nr. 3, 1966, S. 218-224). Gemäß der Erfindung werden aus dem Retentat des ultrafiltrierten Kabinenumlaufwassers, in welchem Overspraymaterial in dispergierter oder gelöster Form vorliegt, in einem oder mehreren, mit entsprechenden Elektroden eines Gleichstromkreises ausgestatteten Zwischenbecken eine oder mehrere Elektroden mit Lackmaterial beschichtet. Das abgeschiedene Material kann beispielsweise von den Elektroden in ein Resolubilisierungsbecken überführt und durch geeignete Neutralisationsmittel bzw. gegebenenfalls Hilfslösemittel resolubisiert und, gegebenenfalls nach Ergängung einzelner Komponenten, einem entsprechenden Ultrafiltrationskreislauf oder direkt der Spritzkabine als Spritzlack zugeführt werden. Es kann aber auch anderen Verwendungszwecken zugeführt oder entsorgt werden.

Die Abscheidungselektroden können z. B. in Form von Platten, Scheiben, Walzen oder Endlosbändern ausgebildet sein.

Für das erfindungsgemäße Verfahren eignen sich wäßrige Überzugmittel, die neutralisierte oder zumindest teilneutralisierbare Bindemittel enthalten, wie zum Beispiel anionische gesättigte Polyesterharze, Polyurethanharze und/oder Acrylpolymere. In diesen Fällen werden zur Resolubilisierung nach der Elektrokoagulation basische Neutralisationsmittel, wie zum Beispiel Ammoniak und Amine, verwendet. Liegen kationische Bindemittel vor, die an der Kathode abgeschieden werden, werden zur Resolubilisierung saure Neutralisationsmittel verwendet, wie organische Monocarbonsäuren, zum Beispiel Ameisensäure, Essigsäure, Propionsäure und Milchsäure.

Als Hilfslösemittel kommen übliche, wie beispieslweise Alkohole, Glykolether und Propylglykolether in Betracht.

Darüber hinaus sind alle wäßrige Dispersionen und Emulsionen für das erfindungsgemäße Verfahren geeignet, die sich elektrisch abscheiden und von der Elektrode entfernen lassen. Für ein Recycling-Verfahren, bei welchem das Overspray wiederverwendet wird, sind oxidierbare Bindemittel oft nicht geeignet. Der Fachmann kann die Eignung durch Vorversuche im Labor feststellen, ob sich der Wasserlack für die Elektrokoagulation und für die Resolubilation eignet, indem der eine Elektrotauch-Beschichtung des auf 5 bis 10 Gew.-% Festkörpergehalt mit entsalztem Wasser verdünnten Wasserlackes durchführt. Wenn die Bildung eines Elektrokoagulates an der Elektrode beobachtet wird, kann er auf die Verwendbarkeit des Koagulates für den gewünschten Verfahrensablauf im Rahmen des erfindungsgemäßen Verfahrens prüfen. Es ist dem Fachmann bekannt, daß alle wasserverdünnbaren Lacke für die Elektrokoagulation in Betracht kommen, auch solche, die sich für die Elektrotauchlackierung nicht eignen, weil sie zum Beispiel unter den Bedingen der Elektrotauchlackierung und nachfolgender Vernetzung keine brauchbare glatte, korrosionsfeste oder resistente Filme bilden.

Das erfindungsgemäße Verfahren kann demnach mit wasserverdünnbaren Überzugsmitteln durchgeführt werden, wie sie dem Fachmann geläufig und im Handel erhältlich sind. Geeignet sind beispielsweise wasserverdünnbare Lacke, wie sie für die Serienlackierung in der Industrie, einschließlich Autoindustrie, verwendet werden. Geeignet sind zum Beispiel wasserverdünnbare Basislacke, pigmentierte und unpigmentierte Decklacke, wie sie in der Autoindustrie eingesetzt werden.

Notwendige Additive, wie zum Beispiel Antischaummittel, Additive zur Vermeidung von Oberflächenstörungen, Verlaufsadditive, Koaleszenzadditive, können den wäßrigen Lacken und Dispersionen bzw. den Lacknachfüllkonzentraten oder nachträglich den Recycling-Kreisläufen zugesetzt werden. Nachträglich zugegebene Additive können allerdings die Eigenschaften des wäßrigen Überzugsmittels verändern und unter Umständen verschlechtern.

Das erfindungsgemäße Verfahren wird bevorzugt an wäßrigen Überzugsmitteln durchgeführt, die einen Festkörpergehalt von 15 bis 80 Gew.-% aufweisen.

Die Bestimmung der Festkörpergehalte von wäßrigem Überzugsmittel sowie in den einzelnen Kreisläufen kann beispielsweise nach DIN 53216 durchgeführt werden. Dabei ist es bevorzugt, nach der Einwaage der zu bestimmenden Probe auf einer Metallschale mit flachem Boden zuerst etwa eine halbe Stunde bei etwa 95°C vorzuwärmen. Dadurch wird ein Teil des Wassers verdampft und kann dann nicht mehr zu falschen Ergebnissen durch Verspritzen führen.

Die wasserverdünnbaren Überzugsmittel, beispielsweise wasserverdünnbaren Lacke und Füller, können gegebenenfalls Pigmente und/oder Füllstoffe enthalten, sie können jedoch auch als Klarlacke formuliert sein. Sie können organische Lösemittel enthalten oder frei von organischen Lösemitteln sein.

Die für das erfindungsgemäße Verfahren einsetzbaren wasserverdünnbaren Überzugsmittel können, wie erwähnt, transparent oder pigmentiert sein. Sie können gegebenenfalls Füllstoffe, Additive wie z.B. Antischaummittel, Koaleszenzmittel, flüchtige organische Flüssigkeiten und sonstige übliche Lackrohstoffe enthalten. Sie können physikalisch trocknend sein. Es kann sich um selbstvernetzende oder fremdvernetzende Systeme, beispielsweise für Einbrennlacke, handeln.

Die erfindungsgemäß eingesetzten Spritzkabinen sind übliche Spritzkabinen. Sie können mit üblichem Zuluft- und Abluft-Kreislauf betrieben werden. Die einsetzbaren Spritzkabinen können beispielsweise mit mindestens einer Naßrieselwand oder mit einer Venturi-Auswaschung, wie sie insbesondere bei der Kraftfahrzeuglackierung üblich ist, ausgestattet sein. Im Falle von Naßrieselwänden können sämtliche Wandungen als Naßrieselwände ausgebildet sein. Derartige Spritzkabinen sind dem Fachmann geläufig. Die Spritzkabinen können gegebenenfalls mit Einrichtungen zu Verhinderung der Pigmentsedimentation versehen sein.

Durch die vorliegende Erfindung wird ein Verfahren bereitgestellt, das die problemlose praktische Rückgewinnung von Overspray ermöglicht, das bei der Spritzapplikation wäßriger Überzugsmittel anfällt. Das erfindungsgemäße Verfahren ist besonders geeignet zur Anwendung auf die manuelle, automatische oder elektrostatische Spritzapplikation, wie sie insbesondere bei der Serienlackierung durchgeführt wird. Es ermöglicht eine umweltschonende praktisch 100%ige Rückgewinnung von Overspray.

Das Verfahren kann sowohl diskontinuierlich als auch kontinuierlich durchgeführt werden.

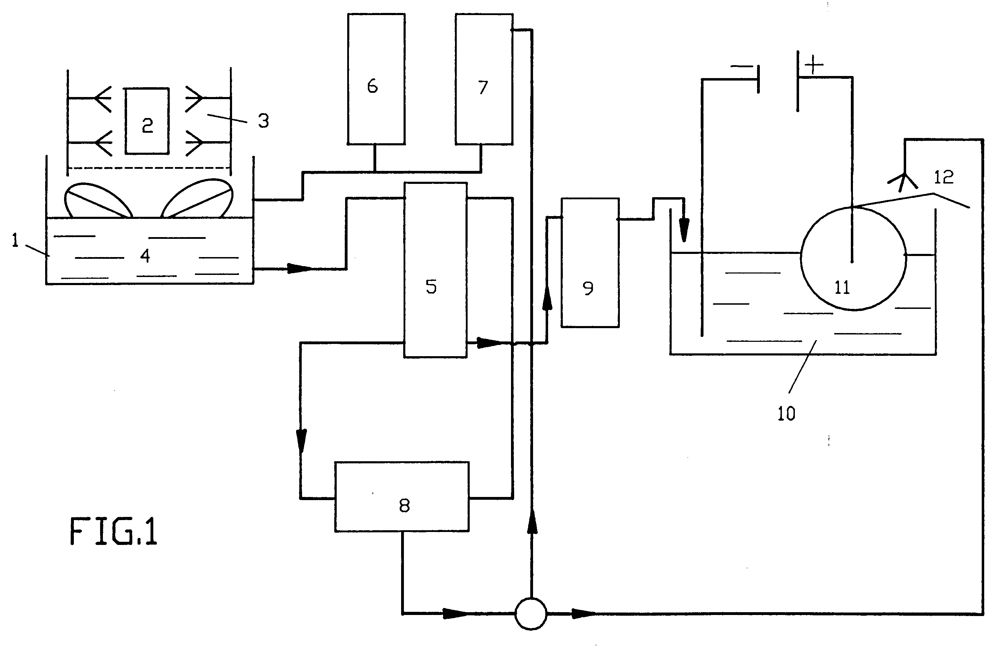

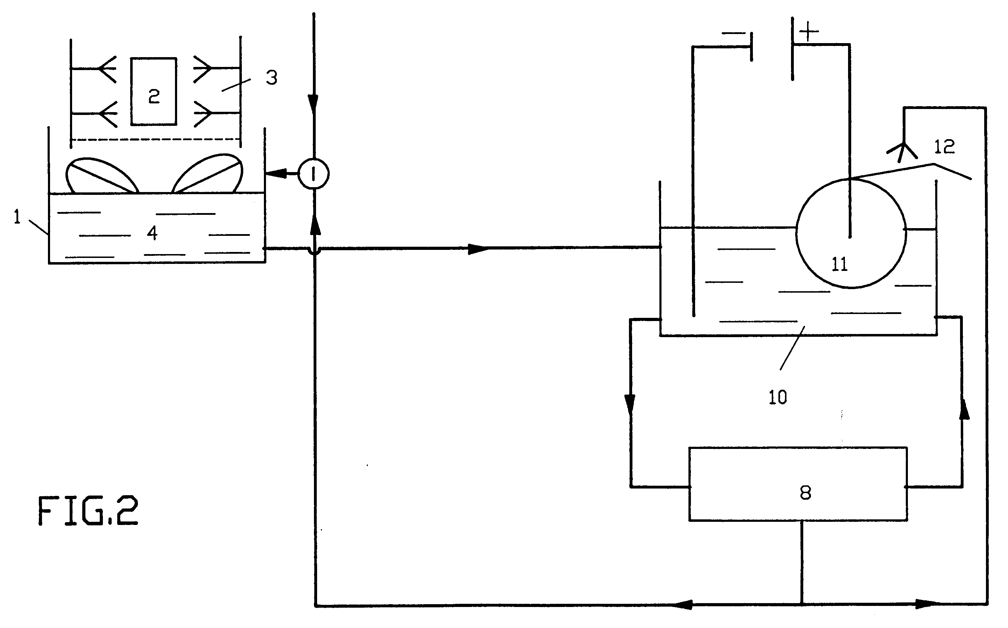

Im Folgenden werden zwei Beispiele für die erfindungsgemäße Verfahrensweise anhand der beigefügten Figuren beschrieben. Figur 1 stellt ein Beispiel für eine diskontinuierliche Ausführungsform und Figur 2 stellt ein Beispiel für eine kontinuierliche Ausführungsform des erfindungsgemäßen Verfahrens dar.

Bei der Ausführungsform der Figur 1, wird in einer Spritzkabine 1 ein zu lackierender Gegenstand 2 von Spritzeinrichtungen 3 gespritzt; das erhaltene Overspray wird in der Kabinenumlaufflüssigkeit 4 aufgefangen und am Boden der Spritzkabine gesammelt. Dabei wird in der Spritzkabine so gearbeitet, daß in der Kabinenumlaufflüssigkeit das Overspray bis auf 1,5 Gew.-% (15 kg/m³) angereichert wird.

Anschließend wird die beladene Umlaufflüssigkeit in einen Vorratsbehälter 5 übernommen und das Kabinenumlaufsystem wird mit entsalztem Wasser, Permeat oder einer Mischung beider aus den Behältern 6 und 7 als Kabinenumlaufflüssigkeit neu gefüllt.

Die Kabinenumlaufflüssigkeit aus dem Vorratsbehälter 5 wird im Kreislauf durch eine Ultrafiltrationsanlage 8 geführt und so lange konzentriert, bis der Overspray-Feststoffgehalt beispielsweise 5 - 10 Gew.-% beträgt. Dabei wird das Permeat im Behälter 7 zur Wiederverwendung als frische Umlaufflüssigkeit alleine oder in Abmischung mit Wasser aufgefangen.

Das bei der Ultrafiltration erhaltene Retentat wird direkt, oder über einen Pufferbehälter 9 in eine Elektrokoagulationszelle 10 übergeführt.

In der Elektrokoagulationszelle 10 wird der Feststoff im vorliegenden Beispiel anodisch abgeschieden. Im vorliegenden Beispiel ist die Anode als Walze 11 ausgebildet und mit einer Abstreif- bzw. Abkratzvorrichtung und Abspüleinrichtung 12 versehen, mit der der anhaftende Tauchfilm beispielsweise mit Permeat abgespült werden kann. Das Volumen und der Feststoffgehalt in der Elektrokoagulationszelle können durch Zufuhr aus dem Pufferbehälter 9 gesteuert werden, gegebenenfalls auch durch Ablaß in den Vorratsbehälter für Kabinenumlaufflüssigkeit 5, zur weiteren Ultrafiltration.

Allgemein ist es beim erfindungsgemäßen Verfahren möglich die Elektrokoagulationszelle mit einer Einrichtung zur Elektrodialyse zu versehen, die dazu geeignet ist, einen möglichen Amingehalt aus der zu reinigenden Flüssigkeit ganz oder partiell zu entfernen.

Weiter ist es allgemein beim erfindungsgemäßen Verfahren möglich dem Überzugsmittel bzw. wäßrigen Lack oder den Kreisläufen Biozide zur Vermeidung unerwünschte biologischer Effekte zuzugeben.

In der Figur 2 wird ein weiteres Beispiel für eine erfindungsgemäße Ausführungsform angegeben, die kontinuierlich arbeitet. In einer Spritzkabine 1 wird ein zu lackierender Gegenstand 2 mit Spritzeinrichtungen 3 lackiert; das Overspray wird in der Umlaufflüssigkeit 4 aufgefangen. Diese wird bei einem annähernd konstanten Feststoffgehalt gehalten, beispielsweise bei etwa 1 Gew.-% Overspray-Feststoffen. In dem Maße, wie Overspray durch die Umlaufflüssigkeit aufgenommen wird, wird Umlaufflüssigkeit kontinuierlich entzogen und das Volumen wird durch Zufuhr von Permeat, entsalztem Wasser oder einem Gemisch von Permeat und entsaltzem Wasser konstant gehalten. Die beladene Kabinenumlaufflüssigkeit wird direkt oder über einen Pufferbehälter der Elektrokoagulationszelle 10 zugeführt. An die Elektrokoagulationszelle ist eine Ultrafiltrationseinheit 8 angeschlossen. Diese wird kontinuierlich betrieben und entzieht pro Zeiteinheit soviel Permeat, wie an Umlaufwasser zugeführt wird, und gegebenenfalls eine zusätzliche Menge, die zum Abspülen des elektrokoagulierten Materials von der Anode 11 mittels Abstreif- bzw. Abspülvorrichtung 12 benötigt wird.

Die Elektrokoagulationszelle scheidet pro Einheit soviel Feststoff des Überzugsmittels bzw. Lackes ab, wie ihr über das Umlaufwasser zugeführt wird.

Das erhaltene Permeat kann direkt oder über einen Pufferbehälter ganz oder teilweise in Abmischung mit Wasser der Kabinenumlaufflüssigkeit zur Volumenergänzung zugeführt werden.

Auch im vorliegenden Beispiel ist es möglich die generelle Arbeitsweise der Aminabführung durch Elektrodialyse aus der Elektrokoagulationszelle zu bewirken.

Durch das erfindungsgemäße Verfahren wird es möglich Oversprays aus wäßrigen Überzugsmitteln zurückzugewinnen. Die rückgewonnen Oversprays können im wäßrigen Überzugsmittel wiederverwertet werden. Auch im Falle häufiger Farbtonwechsel in der Spritzkabine ist die Wiederverwertung für einen anderen Lack oder ein anderes Produkt in weitgehend wasserfreiem und lösungsmittelfreiem Zustand möglich. Probleme der Lackstabilität und des Feststoffaustrags aus dem System werden weitgehend vermieden. Durch die erfindungsgemäße Verfahrensweise wird der Einsatz hochqualitätiver und daher meist empfindlicher Überzugsmittel im Praxismaßstab ermöglicht, wie beispielsweise wäßriger Industrielacke und bevorzugt wäßriger Autolacke. Ein weiterer Vorteil der erfindungsgemäßen Verfahrens ist die Möglichkeit der kontinuierlichen oder diskontinuierlichen Durchführung.

## Patentansprüche

1. Verfahren zur Rückgewinnung des Oversprays von wässrigen Überzugsmitteln beim Spritzauftrag in Spritzkabinen (1), in denen wäßrige Umlaufflüssigkeit (4) im Kreislauf zur Aufnahme des Oversprays geführt wird, **dadurch gekennzeichnet,** daß man der Umlaufflüssigkeit (4) das Overspraymaterial in einem Elektrokoagulationsbad (10) entzieht, wobei man die Konzentration des Oversprays im Elektrokoagulationsbad (10) durch Ultrafiltration (8) höher hält als in der Umlaufflüssigkeit (4) der Spritzkabine (1).

2. Verfahren nach Anspruch 1, dadurch gekennzeichnet, daß die Festkörperkonzentration an Overspray in der Umlaufflüssigkeit (4) der Spritzkabine (1) bei bis zu 1,5 Gew.-% und im Elektrokoagulationsbad (10) durch Ultrafiltation (8) bei 5 bis 15 Gew.-% gehalten wird.

3. Verfahren nach Anspruch 1 oder 2, dadurch gekennzeichnet, daß die Elektrokoagulation der Umlaufflüssigkeit (4) der Spritzkabine (1) diskontinuierlich durchgeführt wird.

4. Verfahren nach Anspruch 1 oder 2, dadurch gekennzeichnet, daß kontinuierlich ein Teil der Umlaufflüssigkeit (4) der Spritzkabine (1) der Ultrafiltration (8) und Elektrokoagulationsbehandlung unterzogen wird.

5. Verfahren nach einem der vorhergehenden Ansprüche, dadurch gekennzeichnet, daß das bei der Elektrokoagulationsbehandlung an einer Anode oder Katode abgeschiedene Overspraymaterial von der Anode oder Katode entfernt und dem Spritzauftrag in der Spritzkabine (1) gegebenenfalls nach entsprechender Wiederaufbereitung erneut zugeführt wird.

6. Verfahren nach einem der vorhergehenden Ansprüche, dadurch gekennzeichnet, daß das bei der Ultrafiltration (8) erhaltene Permeat der Umlaufflüssigkeit (4) der Spritzkabine (1), gegebenenfalls nach Abmischung mit Wasser, zugeführt wird.

7. Verfahren nach einem der vorhergehenden Ansprüche, dadurch gekennzeichnet, daß das bei der Elektrokoagulationsbehandlung abgeschiedene Overspray einer Wiederverwertung ohne Resolubilisierung in Wasser zugeführt wird.

## Claims

1. A process for recovering overspray from water-based coating materials during spray application in spraying booths (1) in which aqueous circulating liquid (4) is recycled to take up the overspray, characterised in that the overspray material is extracted from the circulating liquid (4) in an electrocoagulation bath (10), wherein the concentration of the overspray in the electrocoagulation bath (10) is maintained higher than in the circulating liquid (4) in the spraying booth (1) by means of ultrafiltration (8).

2. A process according to Claim 1, characterised in that the solids concentration from overspray in the circulating liquid (4) in the spraying booth (1) is maintained at up to 1.5 wt.% and in the electrocoagulation bath (10) is maintained at 5 to 15 wt.% by means of ultrafiltration (8).

3. A process according to Claim 1 or 2, characterised in that electrocoagulation of the circulating liquid (4) in spraying booth (1) is performed batchwise.

4. A process according to Claim 1 or 2, characterised in that some of the circulating liquid (4) in spraying booth (1) is continuously subjected to ultrafiltration (8) and electrocoagulation treatment.

5. A process according to one of the preceding Claims, characterised in that the overspray material deposited at an anode or a cathode during electrocoagulation treatment is removed from the anode or cathode and is returned to the spray application procedure in the spraying booth (1), optionally after appropriate reprocessing.

6. A process according to one of the preceding Claims, characterised in that the permeate obtained from ultrafiltration (8) is supplied to the circulating liquid (4) in the spraying booth (1), optionally after mixing with water.

7. A process according to one of the preceding Claims, characterised in that the overspray material deposited during electrocoagulation treatment is reused without being resolubilised in water.

## Revendications

1. Procédé pour récupérer l'excès de pulvérisation d'un produit d'enduction aqueux lors de l'enduction par pulvérisation dans des cabines de pulvérisation (1), dans lesquelles un fluide en circulation aqueux (4) est entraîné selon un circuit pour absorber l'excès de pulvérisation, caractérisé en ce qu'on prélève du liquide en circulation (4) le matériau formant l'excès de pulvérisation dans un bain d'électrocoagulation (10), la concentration de l'excès de pulvérisation dans le bain d'électrocoagulation (10) étant maintenue, par ultrafiltration (8), à un niveau plus élevé que dans le liquide en circulation (4) de la cabine de pulvérisation (1).

2. Procédé selon la revendication 1, caractérisé en ce que la concentration en substances solides de l'excès de pulvérisation dans le liquide en circulation (4) est maintenue à une valeur atteignant jusqu'à 1,5 % en poids dans le liquide en circulation (4) de la cabine de pulvérisation (1) et entre 5 et 15 % en poids dans le bain d'électrocoagulation (10) par ultrafiltration (8).

3. Procédé selon la revendication 1 ou 2, caractérisé en ce que l'électrocoagulation du liquide en circulation (4) de la cabine de pulvérisation (1) est exécutée d'une manière discontinue.

4. Procédé selon la revendication 1 ou 2, caractérisé en ce qu'une partie du liquide en circulation (4) de la cabine de pulvérisation (1) est soumise en continu à l'ultrafiltration (8) et au traitement d'électrocoagulation.

5. Procédé selon l'une des revendications précédentes, caractérisé en ce qu'on élimine de l'anode ou de la cathode le matériau de l'excès de pulvérisation, qui est déposé au niveau d'une anode et d'une cathode lors du traitement d'électrocoagulation, et qu'on l'envoie à nouveau, éventuellement après un retraitement correspondant, pour l'enduction par pulvérisation dans la cabine de pulvérisation (1).

6. Procédé selon l'une des revendications précédentes, caractérisé en ce que le produit de perméation, obtenu lors de l'ultrafiltration (8), du liquide en circulation (4) est envoyé à la cabine de pulvérisation (1), éventuellement après mélange avec de l'eau.

7. Procédé selon l'une des revendications précédentes, caractérisé en ce que l'excès de pulvérisation déposé lors du traitement d'électrocoagulation est envoyé à une unité de recyclage sans remise en solution dans l'eau.
